# EUROPÄISCHE PATENTSCHRIFT

(11) **EP 0 483 480 B1**
(45) Veröffentlichungstag und Bekanntmachung des Hinweises auf die Patenterteilung: **31.01.1996**
(21) Anmeldenummer: 91114493.9
(22) Anmeldetag: 29.08.1991
(51) Int. Cl.: C07F 7/18

(54) **Verfahren zur Herstellung von Methacryloxy-oder Acryloxygruppen enthaltende Organosilanen**
Process for the preparation of organosilanes containing a methacryloxy group or an acryloxy group
Procédé pour la préparation d'organosilane contenant des groupes méthacryloxy ou acryloxy

(30) Priorität: 31.10.1990 DE 4034612
(43) Veröffentlichungstag der Anmeldung: 06.05.1992
(73) Patentinhaber: HÜLS AKTIENGESELLSCHAFT, D-45764 Marl (DE)
(72) Erfinder: Bernhardt, Günther, Dr., W-5205 St. Augustin 2 (DE); Steffen, Klaus-Dieter, Dr., W-5202 Hennef 1 (DE); Haas, Margret, W-5000 Köln 60 (DE); Kragl, Heinz, W-5210 Troisdorf 15 (DE)

(56) Entgegenhaltungen:
- JP-A-62 053 995
- US-A- 4 647 683
- US-A- 4 946 977
- TETRAHEDRON LETTERS vol. 25, no. 32, 1984, pages
- 3383 - 3386; BRUNELLE, D.J. ET AL: 'N-ALKYL-4-(N',N'-DIALKYLAMINO)PYRIDINIUM SALTS: THERMALLY STABLE PHASE TRANSFER CATALYSTS FOR NUCLEOPHILIC AROMATIC DISPLACEMENT'
- CHEMICAL ABSTRACTS, vol. 111, 1989, Columbus, Ohio, US; abstract no. 213983V, DEHMLOW, E.V. ET AL: 'APPLICATIONS OF PHASE TRANSFER CATALYSIS. PART 47. RELATIVE STABILITIES AND PERFORMANCES OF VARIOUS PHASE TRANSFER CATALYSTS' page 542 ;

## Beschreibung

Gegenstand der vorliegenden Erfindung ist ein Verfahren zur Herstellung von Methacryloxy- oder Acryloxygruppen enthaltenden Organosilanen, die im folgenden auch als Acrylsilane bezeichnet werden. Das Verfahren basiert auf der bekannten Umsetzung von Alkalinethacrylaten oder Alkaliacrylaten mit Chloralkylsilanen in Gegenwart von Phasentransfer-Katalysatoren.

Diese Umsetzung ist in der japanischen Patentanmeldung 51348/65 beschrieben; dort wird ausgesagt, daß Acrylsilane der allgemeinen Formel I 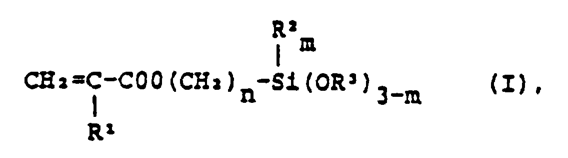 in der R¹ ein Wasserstoffatom oder einen Methylrest, R einen Alkylrest mit 1 bis 4 C-Atomen, R³ Alkylgruppen mit 1 bis 4 C-Atomen, m entweder 0 oder 1 oder 2 und n eine Zahl von 1 bis 4 bedeuten, durch Umsetzung von festen Alkalisalzen der Methacrylsäure oder Acrylsäure mit Chloralkylsilanen der allgemeinen Formel II 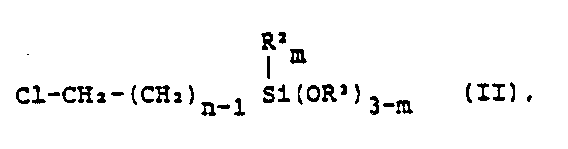 in der R und R³ = C₁- bis C₄-Alkylgruppen, m = 0 bis 2 und n = 1 bis 4 bedeuten, in Gegenwart von quaternären Ammoniumsalzen als Fest-Flüssig-Phasentransfer-Katalysatoren hergestellt werden können.

Als Phasentransfer-Katalysatoren werden in der japanischen Anmeldung Triethylamin, Dimethylanilin, Tetramethylammoniumchlorid und Benzyltrimethylammoniumchlorid genannt. Die beiden zuletzt genannten Verbindungen werden in den Beispielen der japanischen Patentanmeldung für die Umsetzung zwischen der festen Phase, bestehend aus dem Alkalisalz der Methacryl- oder Acrylsäure, und der flüssigen Phase, bestehend aus dem Chloralkylsilan, als Phasentransfer-Katalysatoren verwendet.

Zur Durchführung der Umsetzung sind bei Anwendung dieser Katalysatoren hohe Reaktionstemperaturen von 140 °C bis 180 °C erforderlich, wobei die Reaktionszeit teilweise bis zu 10 Stunden beträgt. Es sind außerdem hohe Überschüsse an Chloralkylsilanen, die bis zum 10fachen der Molmenge an Alkalimethacrylat oder -acrylat betragen können, erforderlich. Weiterhin müssen zusätzliche Lösungsmittel, wie z. B. Dimethylformamid, Toluol oder Xylol, eingesetzt werden.

Die Ausbeuten an Organosilanen liegen bei diesem bekannten Verfahren deutlich unter 90 % und erreichen häufig nur Werte von 70 %. Bei einem Molverhältnis von Alkali(meth)acrylat/Chloralkylsilan von 1 : 1 beträgt die Ausbeute sogar nur 65 %, und als Begleitprodukt entstehen große Mengen polymeren Materials. Außerdem stellen die großen Überschüsse an Chloralkylsilanen, das zusätzliche Lösungsmittel, die langen Reaktionszeiten und die anzuwendenden hohen Reaktionstemperaturen entscheidende Nachteile dar. Lange Reaktionszeiten und hohe Überschüsse an Chlorsilanen führen zu einer erheblichen Minderung der Raum-Zeit-Ausbeute. Außerdem verschlechtern die hohen Überschüsse an Chloralkylsilanen und die Verwendung eines zusätzlichen Lösungsmittels die Energiebilanz bei der destillativen Reindarstellung der Organosilane. Ferner wirkt sich die Verwendung eines zusätzlichen Lösungsmittels nachteilig auf die Ausbeute an Organosilanen aus.

Hohe Temperaturen begünstigen nicht nur die Ausbildung unerwünschter polymerer Produkte, sondern führen auch zu einem nahezu quantitativen Zerfall der quaternären Ammoniumsalze. Dem Fachmann ist bekannt, daß quaternäre Ammoniumsalze oberhalb 110 - 120 °C schnell zerfallen. Infolge Anionenaustausches von Halogenid gegen (Meth)acrylat entstehen beim thermischen Zerfall der quaternären Ammoniumsalze siliciumfreie Methacrylsäure- oder Acrylsäureester und tertiäre Amine. Aus Trimethylbenzylammoniummethacrylat oder -acrylat können als Zerfallprodukte die entsprechenden hochsiedenden Methacrylsäure- oder Acrylsäurebenzylester und Dimethylbenzylamin entstehen, die durch Destillation nur schwer von den Acrylsilanen abzutrennen sind. Dem Fachmann ist bekannt, daß diese Verunreinigungen die Anwendung der Acrylsilane der allgemeinen Formel I erheblich stören oder sogar verhindern können. So bilden die Benzylsäureeester auf wäßrigen Lösungen der Acrylsilane ölartige Filme und verhindern den Einsatz solcher Lösungen als Schlichten für Glasfasern. Andererseits können tertiäre Amine den Einsatz von Acrylsilanen in peroxydisch initiierten Polymerisationsreaktionen beeinträchtigen, da sie die Polymerisationsgeschwindigkeit in unerwünschter Weise steigern können.

In der US-A-4 946 977 ist ein Verfahren zur Herstellung von Methacryloxy- oder Acryloxygruppen enthaltenden Organosilanen der allgemeinen Formel I 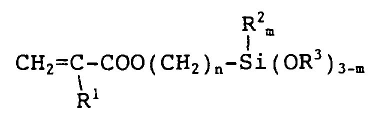 in der R¹ für ein Wasserstoffatom oder eine Methylgruppe, R für einen Alkylrest mit 1 bis 4 C-Atomen, R³ für Alkylgruppen mit 1 bis 4 C-Atomen oder Alkoxyalkylgruppen mit einer Gesamt-C-Zahl von 2 bis 4, m für 0 oder 1 oder 2 und n für 1, 3 oder 4 stehen, durch Umsetzung von Alkalimethacrylaten oder -acrylaten mit Halogenalkylsilanen der allgemeinen Formel II 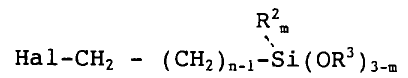 in der R, R³, m und n wie oben definiert sind und Hal für Chlor oder Brom steht, in Anwesenheit von Phasentransfer-Katalysatoren beschrieben, wobei die Umsetzung bei Temperaturen von 80 °C bis 130 °C durchgeführt wird und als Katalysatoren Ammoniumsalze der allgemeinen Formel III 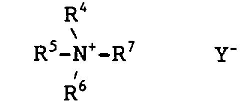 verwendet werden (R⁴, R⁵, R⁶ und R⁷ stehen für gleiche oder ungleiche aliphatische Reste mit 1 bis 37 C-Atomen, Y⁻ steht für ein Halogenid-, Sulfat- oder Phosphation).

Auch bei diesem Verfahren treten die obengenannten, unerwünschten Reaktionen auf.

Es bestand deshalb das Problem, die Umsetzung zwischen Alkali(meth)acrylaten und Chloralkylsilanen unter Bildung von Acrylsilanen so zu führen, daß man bei niedrigen Reaktionstemperaturen arbeiten kann, eine höhere Raum-Zeit-Ausbeute erhält und der Anteil an polymeren Reaktionsprodukten, siliciumfreien Methacrysäure- oder Acrylsäureestern und tertiären Aminen möglichst gering ist.
Als Lösung dieses Problems wurde ein Verfahren zur Herstellung von Acrylsilanen der allgemeinen Formel I 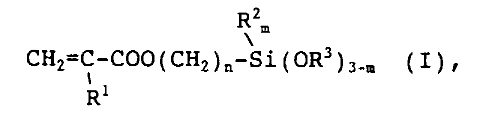 in der R¹ für ein Wasserstoffatom oder eine Methylgruppe, R für einen Alkylrest mit 1 bis 4 C-Atomen, R³ für Alkylgruppen mit 1 bis 4 C-Atomen oder Alkoxyalkylgruppen mit einer Gesamt-C-Zahl von 2 bis 4, m für 0 oder 1 oder 2 und n für 1 oder 3 oder 4 stehen, durch Umsetzung von Alkalisalzen der Methacrylsäure oder Acrylsäure mit Halogenalkylsilanen der allgemeinen Formel II 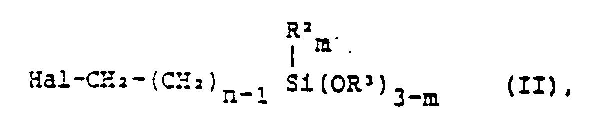 in der R, R³, m und n wie oben definiert sind und Hal für Chlor oder Brom steht, in Gegenwart eines Phasentransfer-Katalysators gefunden, das dadurch gekennzeichnet ist, daß man als Phasentransfer-Katalysator Pyridiniumsalze der allgemeinen Formel III verwendet, 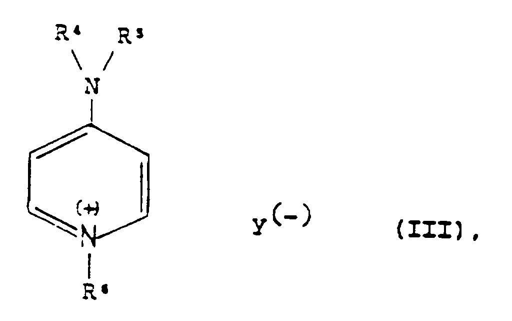 in der Y⁽⁻⁾ für ein Halogenid-Ion und R⁴ und R⁵ für gleiche oder ungleiche aliphatische Reste mit 1 bis 12 C-Atomen und/oder cycloaliphatische Reste mit 5 bis 7 C-Atomen und/oder Benzylreste stehen, oder R⁴ und R⁵ gemeinsamer Bestandteil einer Gruppierung (̵CH_{2)̵a} sein können, worin a für 4, 5 oder 6 steht und der Ring zwischen zwei C-Atomen durch ein Sauerstoffatom unterbrochen sein kann,

R⁶ ein Organosilanrest der um Hal verminderten Verbindung der allgemeinen Formel II ist und die Umsetzung bei Temperaturen von 80 bis 150 °C durchgeführt wird.

Bei der erfindungsgezäßen Verfahrensweise kann man bei erheblich niedrigeren Temperaturen als bei dem in der japanischen Veröffentlichung beschriebenen Verfahren arbeiten und erhält dennoch Ausbeuten, die weit höher sind als bei der bekannten Verfahrensweise. Insbesondere ist der Anteil an polymeren Produkten, siliciumfreien Methacrylsäureoder Acrylsäureestern und tertiären Aminen äußerst gering, da die erfindungsgemäß verwendeten Pyridiniumsalze eine deutlich höhere Thermostabilität aufweisen als die Phasentransfer-Katalysatoren auf Basis von quaternären Ammoniunsalzen.

Die erfindungsgemäß geeigneten Pyridiniumsalze sind solche, die der vorgenannten Formel III entsprechen. Als Beispiele werden genannt:
1-(3'-Trimethoxysilyl-propyl)-4-dimethylamino-pyridinium-chlorid,
1-(3'-Triethoxysilyl-propyl)-4-dimethylamino-pyridinium-chlorid,
1-(3'-Trimethoxysilyl-propyl-4-di-n-butylamino-pyridinium-chlorid,
1-(3'-Trimethoxysilyl-propyl)-4-(4'-methyl-piperidinyl)-pyridinium-chlorid,
1-Trimethoxysilyl-methyl-4-di-n-hexylamino-pyridinium-chlorid,
1-(4'-Trimethoxysilyl-butyl)-4-di-n-butylamino-pyridinium-chlorid,
1-(3'-Trimethoxysilyl-propyl)-4-di-cyclohexylamino-pyridinium-chlorid oder
1-(3'-Triethoxysilyl-propyl)-4-di-benzylamino-pyridinium-chlorid.

Auch Bis-Salze, wie das 1,10-Bis-(4-dihexylamino-pyridinium)-decan-dibromid, sind geeignet.

Besonders geeignet sind 1-(3'-Trimethoxysilyl-propyl)-4-dimethylamino-pyridinium-chlorid und 1-(3'-Triethoxysilyl-propyl)-4-dimethylamino-pyridinium-chlorid.

Die erfindungsgemäß eingesetzten Pyridiniumsalze können durch gemeinsames Erhitzen der Basispyridine mit einem Teil oder der Gesamtmenge des Halogenalkylsilans vor der Umsetzung mit dem Alkalisalz der (Meth)acrylsäure in situ hergestellt werden.

Aufgrund des Einsatzes der beschriebenen Pyridiniumsalze als Katalysatoren wird die Reaktionsgeschwindigkeit der Umsetzung von Alkalisalzen der Methacrylsäure oder Acrylsäure mit Halogenalkylsilanen der allgemeinen Formel II im Vergleich zu den bekannten Verfahren erheblich gesteigert, wobei gleichzeitig die Reaktionstemperatur erniedrigt und die Reaktionsdauer verkürzt werden. So beträgt die Reaktionstemperatur in dem erfindungsgemäßen Verfahren 80 °C bis 150 °C, vorzugsweise 100 °C bis 140 °C, und die Reaktionsdauer zwischen 15 und 180 Minuten, vorzugsweise zwischen 30 und 120 Minuten.

Der Katalysator wird in Mengen von 0,001 Molen bis 0,05 Molen, bevorzugt in Mengen von 0,005 Molen bis 0,03 Molen, bezogen auf 1 Mol Alkalimethacrylat oder -acrylat, verwendet.

Die Reaktionspartner werden im allgemeinen im stöchiometrischen Verhältnis zueinander eingesetzt. Ein geringer Überschuß sowohl von Halogenalkylsilanen als auch des Alkali(meth)acrylats ist möglich, so daß das Molverhältnis des eingesetzten Alkali(meth)acrylats zu dem Halogensilan bevorzugt 1,2 : 1 bis 1 : 1,2 beträgt.

Vorzugsweise wird die Reaktion in Abwesenheit von zusätzlichen Lösungsmitteln durchgeführt. Es ist jedoch auch möglich, die Umsetzung in Gegenwart von organischen wasserfreien Lösungsmitteln (z. B. Alkoholen), die beispielsweise mit einem Reaktionspartner zusammen in das Reaktionssystem eingeführt werden, zu beginnen. Solche Lösungsmittel sollen jedoch dann im Verlauf der Umsetzung, vorzugsweise bereits zu Beginn der Umsetzung, weitgehend aus dem Reaktionsgemisch entfernt werden.

Durch die Vermeidung von hohen Überschüssen an Halogenalkylsilanen und durch den Verzicht auf zusätzliche Lösungsmittel bei der Umsetzung werden sowohl hohe Raum-Zeit-Ausbeuten als auch eine günstige Energiebilanz erreicht, da das Abdestillieren von nicht reaktiv genutzten Chloralkylsilanen und von Lösungsmitteln entfällt. Nach dem erfindungsgemäßen Verfahren werden im Vergleich zu bekannten Verfahren ohne aufwendige Kolonnendestillationen Acrylsilane von hoher Reinheit erhalten.

Als Alkalimethacrylate oder Alkaliacrylate werden erfindungsgemäß die entsprechenden Kalium- oder Natriumsalze verwendet. Sie können sowohl in fester Form, aber auch in Form von Lösungen oder Dispersionen in einem geeigneten Lösungsmittel in die Reaktion eingesetzt werden. Eine bevorzugte Durchführungsform besteht darin, solche Methacrylate oder Acrylate einzusetzen, die durch Neutralisation von Methacrylsäure oder Acrylsäure mit alkoholischen Lösungen von Kaliumalkoholaten oder Natriumalkoholaten hergestellt wurden. Die dabei erhaltenen Lösungen oder Dispersionen werden mit den Halogenalkylsilanen und dem Phasentransfer-Katalysator vermischt, und anschließend werden die Alkohole abdestilliert, wobei mit der Entfernung der Alkohole die Reaktion zwischen Alkalimethacrylaten oder -acrylaten mit den Halogenalkylsilanen einsetzt.

Beispiele für die erfindungsgemäß verwendbaren Halogenalkylsilane der allgemeinen Formel II sind:
Chlormethyldimethylmethoxysilan,
3-Chlorpropyltrimethoxysilan,
3-Chlorpropyltriethoxysilan,
3-Chlorpropyl-tris-(methoxyethoxy)silan,
3-Chlorpropyl-methyl-dimethoxysilan,
3-Chlorpropyl-butyl-dimethoxysilan,
4-Chlorbutyltrimethoxysilan,
4-Chlorbutyl-methyl-dimethoxysilan,
4-Chlorbutyl-tris-(methoxyethoxy)silan.

Die Umsetzung der Alkalimethacrylate oder -acrylate mit Halogenalkylsilanen der allgemeinen Formel II erfolgt durch Abmischung der Reaktanden und des Phasentransfer-Katalysators im gewählten Molverhältnis. Anschließend wird die dabei erhaltene Reaktionsmischung unter ständiger Durchmischung auf die Reaktionstemperatur gebracht; dabei werden ggf. anwesende zusätzliche Lösungsmittel abdestilliert.

Nach Beendigung der Umsetzung werden die gebildeten Acrylsilane in an sich bekannter Weise isoliert. Zweckäßigerweise werden sie abdestilliert, entweder nach Abtrennung von ausgefallenem Alkalichlorid oder direkt aus dem erhaltenen Reaktionsgemisch. Zur Schonung der Acrylsilane ist es im allgemeinen zweckmäßig, die Destillation unter reduziertem Druck durchzuführen.

Es ist von Vorteil, bereits während der Umsetzung dem Reaktionsgemisch an sich bekannte Polymerisationsinhibitoren zuzusetzen. Dazu geeignete Substanzen sind z. B.
Hydrochinon,
Hydrochinonmonomethylether,
N,N'-Diphenyl-p-phenylendiamin,
Phenyl-2-naphthylamin,
2,6-Di-tert.-butyl-4-methyl-phenol,

die in Mengen von 0,001 bis 1 Gew.-%, bezogen auf das Acrylsilan, hinzugefügt werden. Die Polymerisationsinhibitoren können für sich allein oder in Abmischungen verwendet werden. Auch das destillierte oder auf andere Weise isolierte Reinprodukt wird vorteilhafterweise mit den gleichen Inbibitoren versetzt.

Die erfindungsgemäß hergestellten Acrylsilane werden beispielsweise als Haftvermittler in Schlichten für Glasfasern verwendet.

### Beispiel 1

124 g (1 Mol) Kaliummethacrylat werden mit 198,5 g (1 Mol) 3-Chlorpropyltrimethoxysilan, 2,7 g 1-(3'-Trimethoxysilyl-propyl)-4-dimethylamino-pyridinium-chlorid und 0,5 g N,N'-Diphenyl-p-phenylendiamin gemischt und unter Rühren auf 135 °C erhitzt. Nach 1 Stunde wird abgekühlt, das entstandene Kaliumchlorid abfiltriert und mit 60 g Methanol gewaschen. Aus den vereinigten Filtraten wird das Methanol abgedampft und der Rückstand unter vermindertem Druck destilliert. Es werden 225 g 3-Methacryloxypropyltrimethoxysilan vom Siedepunkt 82 °C (0,4 mbar) erhalten. Bezogen auf eingesetztes Kaliummethacrylat beträgt die Ausbeute 90,7 %. Die Reinheit beträgt 99,0 %. Im Gaschromatogramm sind nur Spuren von 4-Dimethylamino-pyridin nachweisbar. Eine 2 %ige Lösung in Wasser vom pH 4 enthält keinerlei ölige Abscheidung.

### Beispiele 2 bis 5

In Abänderung von Beispiel 1 werden anstelle von 3-Chlor-propyltrimethoxysilan und des Phasentransfer-Katalysators 1-(3'-Trimethoxysilyl-propyl)-4-dimethylamino-pyridinium-chlorid die in Tabelle 1 angegebenen Chloralkylsilane und die Katalysatoren A bis D verwendet, bei sonst gleicher Verfahrensweise wie in Beispiel 1. In Tabelle 1 sind die erhaltenen Ausbeuten und die Siedepunkte der entsprechenden Methacryloxysilane aufgeführt.

### Beispiel 6

1,74 g (0,015 Mole) 4-Dimethylaminopyridin werden in 201,5 g (1,015 Mole) 3-Chlorpropyltrimethoxysilan gelöst, unter Rühren auf 135 °C erhitzt und 15 Minuten bei dieser Temperatur belassen. Nach Abkühlung auf 60 °C werden 124,2 g (1 Mol) Kaliummethacrylat und 0,6 g N,N'-Diphenyl-p-phenylendiamin hinzugefügt. Die Mischung wird wieder auf 135 °C gebracht. Nach 1 Stunde wird abgekühlt, das entstandene Kaliumchlorid abfiltriert und mit 80 g Methanol gewaschen. Aus den vereinigten Filtraten wird das Methanol abgedampft und der Rückstand unter vermindertem Druck destilliert. Es werden 228,1 g 3-Methacryloxypropyltrimeth-oxysilan vom Siedepunkt 83 °C (0,4 mbar) erhalten. Bezogen auf eingesetztes Kaliummethacrylat beträgt die Ausbeute 92 %. Die Reinheit beträgt 99,0 %. Im Gaschromatogramm sind nur Spuren von 4-Dimethylamino-pyridin nachweisbar.

### Vergleichsbeispiel

Es wird das Beispiel 1 wiederholt, jedoch anstelle von 1-(3'-Trimethoxysilylpropyl)-4-dimethylamino-pyridinium-chlorid wird als Phasentransfer-Katalysator Trimethylbenzylammoniumchlorid in einer Menge von 3,0 g (0,016 Mole) eingesetzt. Bei der Destillation des Filtrats unter reduziertem Druck werden 195 g Destillat vom Siedebereich 60 bis 86 °C (0,3 mbar) erhalten. Die gaschromatographische Analyse ergibt einen Anteil von 35,0 g 3-Methacryloxypropyltrimethoxysilan, was einer Ausbeute von 14,1 %, bezogen auf eingesetztes Kaliummethacrylat, entspricht. Das Destillat enthält 0,37 % Dimethylbenzylamin und 0,48 % Benzylmethacrylat. Durch Destillation über eine Füllkörperkolonne (Füllmaterial Raschig-Ringe) unter reduziertem Druck werden 28,5 g 3-Methacryloxy-propyltrimethoxysilan vom Kp. 90 °C (1 mbar) erhalten. Die Reinheit beträgt nach gaschromatographischer Analyse 97,1 %. Eine 2 %ige Lösung in Wasser vom pH 4 enthält auf der Oberfläche einen deutlich wahrnehmbaren Ölfilm. Dieser wurde nach Extraktion mit n-Hexan durch massenspektroskopische Analyse als Gemisch aus Dimethylbenzylamin und Benzylmethacrylat identifiziert.

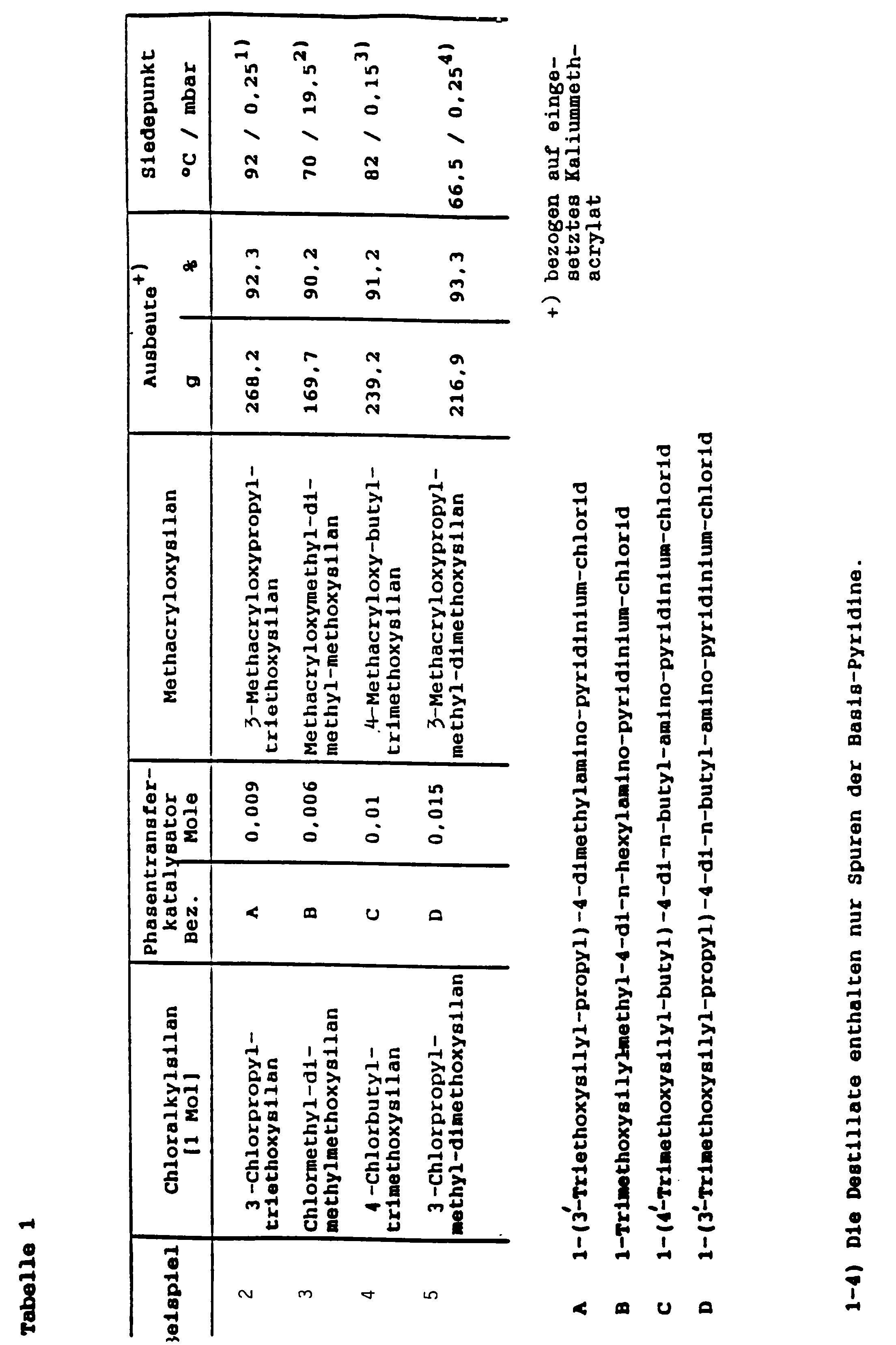

## Patentansprüche

1. Verfahren zur Herstellung von Methacryloxy- oder Acryloxygruppen enthaltenden Organosilanen der allgemeinen Formel I 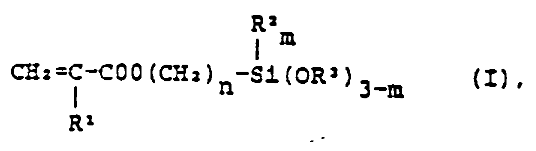 in der R¹ für ein Wasserstoffatom oder eine Methylgruppe, R für einen Alkylrest mit 1 bis 4 C-Atomen, R³ für Alkyl-gruppen mit 1 bis 4 C-Atomen oder Alkoxyalkylgruppen mit einer Gesamt-C-Zahl von 2 bis 4, m für 0 oder 1 oder 2 und n für 1, 3 oder 4 stehen, durch Umsetzung von Alkalimeth-acrylaten oder -acrylaten mit Halogenalkylsilanen der allgemeinen Formel II 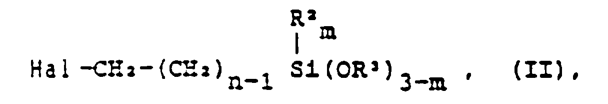 in der R, R³, m und n wie oben definiert sind und Hal für Chlor oder Brom steht, in Anwesenheit von Phasentransfer-Katalysatoren, dadurch gekennzeichnet, daß die Umsetzung bei Temperaturen von 80 °C bis 150 °C durchgeführt wird und als Katalysatoren Pyridiniumsalze der allgemeinen Formel III verwendet werden 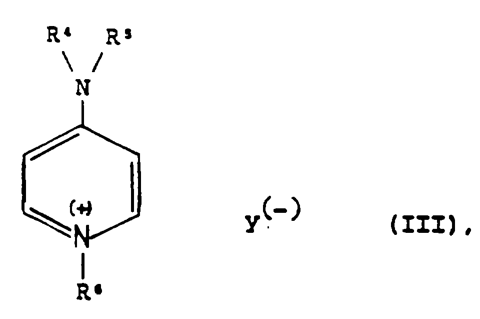 in der Y ⁽⁻⁾ für Halogenid-Ion und R⁴ und R⁵ für gleiche oder ungleiche aliphatische Reste mit 1 bis 12 C-Atomen und/oder cycloaliphatische Reste mit 5 bis 7 C-Atomen und/oder Benzylreste stehen, oder R⁴ und R⁵ gemeinsamer Bestandteil einer Gruppierung (CH₂)ₐ sein können, worin a für 4, 5 oder 6 steht und der Ring zwischen zwei C-Atomen durch ein Sauerstoffatom unterbrochen sein kann, und R⁶ ein Organosilanrest der um Hal verminderten Verbindung der allgemeinen Formel II ist.

2. Verfahren nach Anspruch 1, dadurch gekennzeichnet, daß als Pyridiniumsalze 1-(3'-Trialkoxysilylpropyl)-4- dimethylaminopyridiniumchloride verwendet werden.

## Claims

1. Process for the production of methacryloxy- or acryloxy group-containing organosilanes of the general formula I 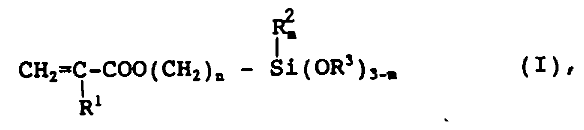 in which R¹ stands for a hydrogen atom or a methyl group, R for an alkyl radical with 1 to 4 C atoms, R³ for alkyl groups with 1 to 4 C atoms or alkoxyalkyl groups with a total C count of 2 to 4, m for 0 or 1 or 2 and n for 1, 3 or 4, through reaction of alkali methacrylates or acrylates with halogen alklyl silanes of the general formula II 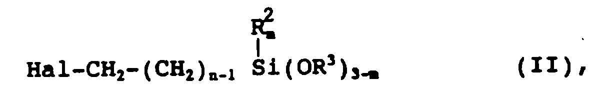 in which R, R³, m and n are as defined above and Hal stands for chlorine or bromine, in the presence of phase-transfer catalysts, characterized in that the reaction is carried out at temperatures of 80 °C to 150 °C and pyridinium salts of the general formula III are used as catalysts 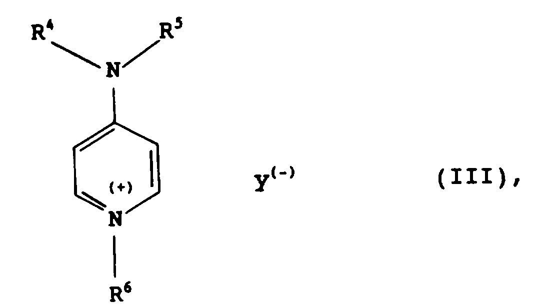 in which Y⁽⁻⁾ stands for halide ion and R⁴ and R⁵ for the same or different aliphatic radicals with 1 to 12 C atoms and/or cycloaliphatic radicals with 5 to 7 C atoms and/or benzyl radicals, or R⁴ and R⁵ can be a joint constituent of a (CH₂)ₐ grouping in which a stands for 4, 5 or 6 and the ring between two C atoms can be broken by an oxygen atom, and R⁶ is an organosilane radical of the general formula II less Hal.

2. Process according to claim 1, characterized in that 1-(3'-trialkoxysilylpropyl)-4-dimethylamino pyridinium chlorides are used as pyridinium salts.

## Revendications

1. Procédé d'obtention d'organosilanes contenant des groupes méthacryloxy ou acryloxy, de formule générale I 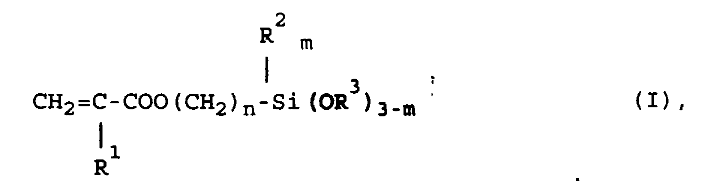 dans laquelle R¹ représente un atome d'hydrogène ou un radical méthyle,
R représente un radical alcoyle ayant de 1 à 4 atomes de carbone,
R³ représente des radicaux alcoyle ayant de 1 à 4 atomes de carbone ou des groupes alcoxyalcoyle ayant un nombre total d'atomes de carbone de 2 à 4, m représente 0, ou 1 ou 2 et n représente 1, 3 ou 4
par réaction de méthacrylates ou d'acrylates de métal alcalin avec des halogénoalcoylsilanes de formule générale II 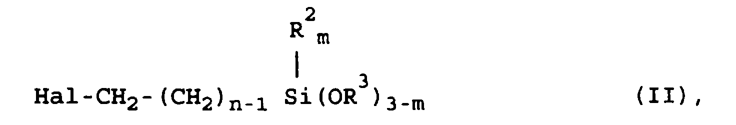
dans laquelle R, R³, m et n sont définis comme ci-dessus et Hal représente du chlore ou du brome,
en présence des catalyseurs de transfert de phase, caractérisé en ce que la réaction est effectuée à des températures allant de 80°C à 150°C, et en ce qu'on utilise comme catalyseurs des sels de pyridinium de formule générale III 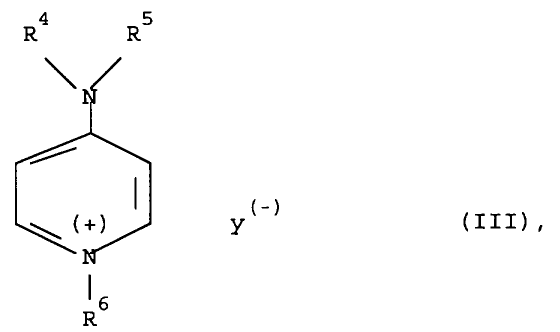 dans laquelle y⁽⁻⁾ représente un ion halogénure et R⁴ et R⁵ représentent des radicaux aliphatiques semblables ou dissemblables, ayant de 1 à 12 atomes de carbone et/ou des radicaux cycloaliphatiques ayant de 5 à 7 atomes de carbone, et/ou des radicaux benzyle ou bien R⁴ et R⁵ peuvent être le constituant commun d'un groupement (CH₂)ₐ, dans lequel a représente 4, 5 ou 6 et le cycle entre deux atomes de carbone peut être interrompu par un atome d'oxygène et R⁶ est un radical d'organosilane d'un composé de formule générale II, diminué de Hal.

2. Procédé selon la revendication 1, caractérisé en ce que comme sel de pyridinium, les chlorures de 1-(3-trialcoxysilylpropyl)-4-diméthylaminopyridinium sont utilisés.
